(19) Europäisches Patentamt

European Patent Office

Office européen des brevets

(11) EP 2 873 534 A1

(12) EUROPEAN PATENT APPLICATION

(43) Date of publication:
20.05.2015 Bulletin 2015/21

(51) Int Cl.:
B44C 1/10 (2006.01)    C09J 7/00 (2006.01)
B60R 13/00 (2006.01)

(21) Application number: 14189579.7

(22) Date of filing: 20.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.10.2013 US 201314059043

(71) Applicant: VanDenBerghe, Garry Cyrille Alfred
Coldstream, British Columbia V1B 3X2 (CA)

(72) Inventor: VanDenBerghe, Garry Cyrille Alfred
Coldstream, British Columbia V1B 3X2 (CA)

(74) Representative: Franke, Dirk
Franke & Partner
Patent- und Rechtsanwälte
Widenmayerstraße 25
80538 München (DE)

(54) **Applying an adhesive film to a surface using a tape comprising filaments for cutting the film**

(57)    An adhesive film (10) is applied to a surface of an object by providing a tape (13) with an adhesive (13F) on the rear surface (13B) and a release characteristic on the front surface (13A). The tape has three parallel spaced filaments (14, 15, 16) in the adhesive which are used to tear through the film to form a strip (10Z) of the film which is attached to the object as a stand-alone visible stripe thereon.

In an alternative embodiment, two adhesive films (10, 20) are applied to a surface of an object by providing a tape (23) with an adhesive (23F) on the rear surface (23B) and a release characteristic on the front surface (23A). The tape has two parallel spaced filaments (24, 25) in the adhesive which are used to tear through the films to form butting edges (40A, 40B) of the films and to form a strip (30) of one of the films which is attached to the object as a protective cover for the butting edges.

FIG.1A

FIG.1B

## FIG.1C

## FIG.1D

## FIG.1E

## FIG.1F

**Description**

This invention relates to a method of applying an adhesive film to a surface of an object such as a printed or colored film applied over a vehicle and to a tape designed to be used in the method.

BACKGROUND OF THE INVENTION

Popular customization of vehicles in some cases involves the application of an adhesive film carrying printed graphics to the exterior surface of the vehicle. Such a film is readily available for example from 3M and is provided in large sheets carrying a pressure sensitive adhesive covered by a release layer allowing the sheet to be printed with the required graphics and applied to the vehicle. The sheet can also be printed with a solid color where portions of the sheet are applied in shaped patterns to provide the required attractive effect.

One issue which remains a difficulty is that of cutting the film at required locations so that the film terminates at the edge of a panel or at any other required location on the surface.

Other issues relate to the cutting of the film to provide butting edges of two adjacent films typically of different colors and to forming narrow stripes of a single color which are popular in the design of graphics of this type.

Reference is made to US Patents 8187407 and 8361615 of the present applicant corresponding to Canadian patent 2700471 which show an arrangement of tape for use in applying a film.

SUMMARY OF THE INVENTION

It is one object of the invention to provide a method of applying an adhesive film to a surface using a tape for cutting the film.

According to one aspect of the invention there is provided a method for applying adhesive film to a surface of an object, the method comprising:

providing a tape having a front surface, a rear surface, a first longitudinal side edge and a second longitudinal side edge defining a width therebetween;
the tape having an adhesive on the rear surface for attachment to the surface of the object;
the front surface of the tape being free from adhesive and having a release characteristic relative to the adhesive film such that the adhesive on the film can be contacted onto the front surface of the tape and pulled away without dislodging the tape from the object;
the tape having a first and a second filament attached thereto at spaced positions across the width of the tape defining a constant spacing therebetween;
applying a length of the tape to surface of the object so as to be attached thereto by the adhesive thereon;

positioning the film onto the surface of the object and over the tape such that the film is attached by the adhesive to the surface of the object and so that the film extends to both side edges of the tape;
pulling the first filament from the tape through that part of the film over the tape so as to cut the film and to form a first cut edge of the film;
pulling the second filament from the tape through that part of the film over the tape so as to cut the film and to form a second cut edge of the film;
the cutting of the film by the first and second filaments forming a strip of the film having a width defined by the spacing between the filaments on the tape;
the strip being attached to the object as a visible stripe thereon;
the tape being removed from the surface.

In one preferred arrangement of the method, the tape is severed along its length so as to provide a first portion of the tape along the first side edge of the tape and a second portion of the tape along the second side edge of the tape and in a further step the first portion of the tape is firstly removed while the film remains attached to the surface along the second edge of the tape and in a final step the second portion of the tape is removed while a part of the strip is attached to the surface. In this way the strip is formed by the cutting action of the filaments and is applied to the surface while it remains always attached to the surface at least over a part of its width. Thus it is held in place by is attachment to the surface and is never a free component which can be tangled and misplaced.

Preferably the tape is severed by a third filament carried on the tape between the first and second filaments which is activated first to cut the tape into two sections while the tape is applied onto the surface. However other methods of severing can be used, including supplying the tape as preformed separate section which are held together when applied but can be readily separated for removal.

Preferably therefore for this arrangement there is provided a third filament located between the first and second filaments.

In another method, the strip remains attached to the tape as a layer over the width of the tape and is removed with the tape from the surface and reapplied to the object as a stripe applied onto the surface or onto the film on the surface. Preferably in this arrangement the strip is applied over butting edges of two adjacent films formed by cutting two films with the tape. The strip is then the same color as one of the films and is applied not to provide a distinct color but instead to protect the butting edges while matching the color of one of the films so as to be not visually distinct.

Preferably, as set out in detail in the prior patents identified above, the tape is extensible so as to allow bending to at least one side by extension along the opposite side. However this is not essential to this method.

Preferably the first and second filaments are spaced from both side edges and the tape has a width arranged such that each filament tears through the tape along the length of the tape, when pulled to cut the film, rather than pulling from one side edge of the tape.

However as an alternative, the first and second filaments can be arranged respectively at the first and second edges of the tape so as to pull out from the edge of the tape rather than tearing through the tape.

Preferably, as set out in detail in the prior patents identified above, the first and second filaments are carried in or on the adhesive on the rear surface.

Preferably, as set out in detail in the prior patents identified above, the filaments are extensible with the tape and the adhesive acts to hold the filaments in place on the tape during bending of the tape while the tape is applied to the surface.

According to a second aspect of the invention there is provided a method for applying adhesive film to a surface of an object, the method comprising:

providing a tape having a front surface, a rear surface, a first longitudinal side edge and a second longitudinal side edge defining a width therebetween;

the tape having an adhesive on the rear surface for attachment to the surface of the object;

the front surface of the tape being free from adhesive and having a release characteristic relative to the adhesive film such that the adhesive on the film can be contacted onto the front surface of the tape and pulled away without dislodging the tape from the object;

the tape having a first and a second filament attached thereto at spaced positions across the width of the tape defining a constant spacing therebetween so that the first filament is closer to the first edge of the tape and the second filament is closer to the second edge;

applying a length of the tape to surface of the object so as to be attached thereto by the adhesive thereon;

positioning a first film onto the surface of the object and over the tape such that the film is attached by the adhesive to the surface of the object and so that the film extends to both side edges of the tape with a main body of the first film on the first edge side of the tape and a removable edge portion of the first film on the second edge side of the tape;

pulling the second filament from the tape through that part of the first film over the tape so as to cut the first film and to form a first cut edge of the first film so as to separate the main body of the first film from the removable edge portion of the first film;

removing the removable edge portion of the first film from a portion of the surface of the object up to the first cut edge;

positioning a second film so that the second film is located onto the surface of the object at said portion of the surface of the object and is attached by the adhesive to said portion;

the second film extending over the first film on the tape so as to define a removable edge portion of the second film on the first edge side of the tape;

pulling the second filament from the tape through those parts of the first and second films over the tape so as to cut the first and second films film and to form butting cut edges of the first and second films with remaining portions of the first and second films extending beyond said butting cut edges;

removing said remaining portions of the first and second films extending beyond said butting cut edges;

the tape being removed from the surface so that the butting cut edges lie in butting relationship on said surface.

This method therefore provides two accurately abutting edges of the two films no matter what the required shape of the butt.

Preferably a strip of the first film is formed by the first and second filaments having a with equal to the constant spacing between the first and second filaments and wherein the strip is removed with the tape from the surface and reapplied to the object over the butting edges for protection thereof. In this case the strip will be of the same color as one of the films so that it is not intended to be visually distinct.

In some cases a primer is applied to the surface at least underneath the tape for increased attachment of the edge of the film to the surface and the adhesive of the tape preferably has the characteristic that the tape can be pulled from the primer on the surface of the object without leaving a residue of the adhesive and without damaging the primer surface.

Preferably the filament has the following characteristics:

the filament is extendible so that, when the tape is stretched during pulling from a supply roll and when applied to the surface, the filament stretches with the tape;

the filament has a strength so that, when applied to the surface, an end of the tape and filament can be broken by hand pulling of the tape without the necessity for cutting;

the filament has a strength so that, when pulled from the tape for cutting the film, the filament cuts the film without breaking;

the filament has an ability to bend to a radius of curvature of less than 0.5 inches without any stiffness in the filament.

Preferably the filament has a weight per unit length which equates to a calculated diameter of the filament, based on an assumption that the filament is circular in cross-section, of less than 0.005 inch.

The filament may be a monofilament, a twisted multi-filament cord or may be a multi-fiber composite filament for example a twisted multi-fiber filament.

The filament is preferably a polymeric material such as polyester or nylon.

It will be appreciated that such polymeric materials when formed into filaments are typically not circular in cross section so that their cross-section is measured in a weight per unit length measurement of tex which is the mass of the filament in grams per 1000 meters of the filament or denier which is the mass in grams of 9000 meters of the filament.

One can calculate the diameter of a filament (assuming it is circular in cross-section, which is typically not correct) given its weight in denier with the following formula:

$$\varnothing = \sqrt{\frac{4.444 \times 10^{-6} \cdot \text{denier}}{\pi \rho}}$$

where P represents the material's density in grams per cubic centimeter and the diameter is in cm.

Or using the following formula based on dTEX (grams per 10,000 meters length)

$$\varnothing = \sqrt{\frac{4 \times 10^{-6} \cdot \text{dtex}}{\pi \rho}}$$

where P represents the material's density in grams per cubic centimeter and the diameter is in cm.

The intention in the present filament is that it has a diameter (assuming it is circular) of less than 0.005 inch (0.127 mm) and preferably less than 0.003 inch (0.0762 mm) and preferably less than 0.002 inch (0.0508 mm) and preferably less than 0.001 inch (0.0254 mm). Depending on the material from which it is formed, the tex or denier of the material can be calculated using the density of the material concerned.

The filament is selected from one of these materials such that it has the minimum diameter to meet the strength requirements for the cutting action set forth above.

Such characteristics of the filament cannot be met by filaments of metal (typically steel), Kevlar or UHMW polyethylene which have a high elastic modulus and cannot be elongated along their length. These materials have very high strength and are typically selected for this purpose on the ground that high strength is required. The present inventors have realized that strength is of secondary importance provided there is sufficient strength to actually cut through the film, and the tape if the filament cuts the tape simultaneously. Thus the strength should be the minimum which can be acceptable and instead the diameter of the filament should be minimized while providing the required strength.

Thus the strength of the filament must be greater than 1.0 pound force to break, so that the action of cutting can be carried out. Where the strength is only slightly greater than 1.0 pounds force it can be maintained less than 3.0 pounds which allows the tape and filament to be both broken by hand.

Thus the filament itself has a strength to break in the range 1 to 3 pounds force. That is a filament having a strength to break greater than 3 pounds and up to 5 pounds is less desirable to use because the strength is unnecessary so that the filament is better to be finer than stronger. It has been established that the pull strength of the order of 1 pound is sufficient to allow the filament to tear through multiple layers simultaneously of the vinyl material provided by 3M which is the preferred film used in the industry. Provided this can be achieved, any additional strength is unnecessary.

Thus the combination of the tape and the filament has a strength to break of less than 3.5 pounds force which reasonable allows the tape and filament to be snapped by hand by the installer as he reaches the end of the tape strip to be applied. This is of significant advantage in the time required for installation. This ability to hand break the tape and filament is a consequence of the realization that the high strength required in previous proposals is not required.

With regard to extensibility, the tape itself is highly extensible having an extension under a load of 8 to 12 pounds force per inch width of the order of 300 to 830%. In many cases the tape is formed of polyethylene or a polyethylene/polyester multi polymer film mix, which provides the high extensibility. Such a high extension under load allows the tape to bend left to right in its plane to follow curvatures of less than 0.5 inches as set forth above. To achieve such curvatures in a tape of the order of 0.125 inches in width and wider, one side must extend significantly relative to the other side creating an extension gradient across the tape. Previous filaments in order to achieve the high strength believed to be required have been basically inextensible under the loads involved.

The filament has been determined to preferably provide an extension greater than 15% under a load of 1.0 pounds force. This extension of the filament allows it to extend during the side to side bending of the tape. This extension of the filament allows it to extend during the application of the tape to the surface. That is the filament extends with the tape as the tape is pulled by the installer with a significantly reduced tendency of the filament to break out of the tape. It has been found that inextensible filaments of the type previously used and proposed, due to the differential in extension from the tape, tend to break out of the adhesive leaving the filament and tape as separate components so that the installer must try to apply the tape while re-inserting the filament into the tape as it is applied. This pulling action on the tape can occur as it is pulled off the supply roll or as it is applied onto the surface. In both cases the separation of filament and tape is highly problematic.

The above stated extension of 15% under a load of 1.0 pounds force has been found to be sufficient to allow the tape and filament to remain connected during the level of stretching of the tape which occurs in practice. The reduction in differential forces tending to separate the filament from the tape also reduces the requirement to have a high bond between the filament and the adhesive on the tape so that filaments which are inherently less able to bond to the adhesive can be used.

Thus the tape with the filament attached should turn through a radius of curvature in both directions (in the plane of the tape) which is less than 3 inches and more preferably less than 1.0m inch or even 0.5 inch without the filament pulling away from the underneath the tape. That is the adhesion of the filament underneath the tape and the ability of the tape and filament to generate the differential stretch must be necessary to make these turns.

The above reduction in required strength which leads to a reduction in diameter (or denier) of the filament also allows a further significant advantage in that the necessity to bond the filament to the adhesive on the tape or bond the adhesive to the surface is much reduced. A high diameter of the filament of greater than 0.005 inch lifts the tape at the location of the filament away from the surface in a "tenting" effect which necessarily reduces the contact width of the adhesive on the surface. A filament of smaller diameter allow a greater width of the tape to be applied to the surface thus increasing the bond of the tape to the surface and reducing the possibility that the filament can escape from the highly bonded tape.

Thus a filament useable in the above method preferably has the following characteristics:

A strength to break in the range 1 to 3 pounds force;
An extension of at least 15% under a load of 1.0 pounds force;
A weight per unit length which equates to a calculated diameter of the filament, based on an assumption that the filament is circular in cross-section, of less than 0.005 inch;
the ability to bend, with zero resistance to bending, to a radius of curvature of less than 0.5 inches.

In one example, a polyester multi-fiber filament of 16 tex can be used which provides a strength to break of 2 pounds force, an extension of 15% under a load of 1.0 pounds force.

The 16 tex polyester fiber described herein has a calculated diameter a little less than 0.005 inch.

This filament with a tape formed from polyethylene of 0.125 inch in width has a combined breaking strength of 2.5 pounds force and can bend side to side to a radius of curvature of 0.5 inches without the filament breaking out from the tape.

This filament provides a breaking strength sufficient to cut through 3 layers at a total of 18 mil (0.018 inch) thickness of materials from 3M sold under the designation 480cv3 which has been recently introduced. The filament can also cut four layers at a total of 20 mil (0.020 inch) thickness of conventional vinyl film and provides a cut line which under magnifying glass is a clean line with no jagged edges. It will be appreciated in this regard that the filament is in some cases required to cut through more than one layer of film and up to three or four layers where the films are overlaid to provide a particular graphics effect with the films.

Adhesive films of this type are available with a release layer from suppliers such as 3M and can be printed with the pattern at the place of application using designs supplied by a customer or can be supplied in solid color for application of solid color panels, strips or other shapes to the surface.

The object is typically a vehicle or boat or other transportation device including automobiles, vans, buses, airplanes and the like. In this case the panel is typically a door or trunk lid.

The area to be left uncovered can be any area of a surface of the object such as a door handle, gas filler cap or the like. In this case the whole surface of the vehicle or other object is to be covered but includes such areas which cannot be covered without interfering with the operation.

BRIEF DESCRIPTION OF THE DRAWINGS

Embodiments of the invention will now be described in conjunction with the accompanying drawings in which:

Figures 1A to 1F show schematic cross sectional views through a series of steps for application of film to a surface using a first method according to the invention using a first tape.
Figures 2A to 2J show schematic cross sectional views through a series of steps for application of film to a surface using a second method according to the invention using a second tape.
Figure 3 is a cross sectional view through a third tape for use in the first method.
Figure 4 is a cross sectional view through a fourth tape for use in the second method.

In the drawings like characters of reference indicate corresponding parts in the different figures.

DETAILED DESCRIPTION

Reference is made to the above patents of the present Applicant to which reference may be made for details of the tape and initial method which are not included herein.

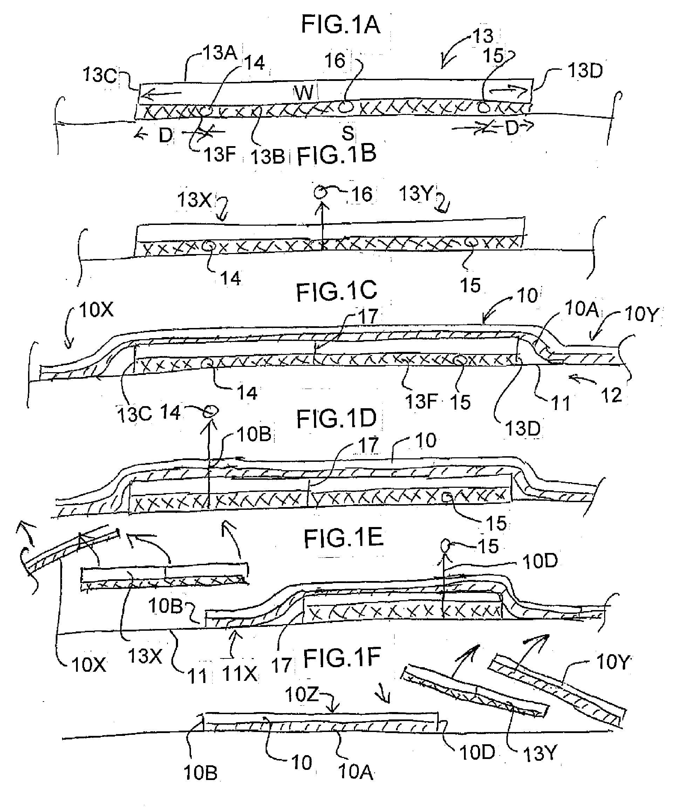

As shown in Figures 1A to 1F, there is shown a method for applying adhesive film 10 having an adhesive layer 10A to a surface 11 of an object 12, The method includes the following steps shown in the series Figure 1A to 1F.+

In Figure 1A there is provided a tape 13 having a front surface 13A, a rear surface 13B, a first longitudinal side edge 13C and a second longitudinal side edge 13D defining a width W therebetween. The tape has an adhesive layer 13F on the rear surface 13B for attachment to the surface 11 of the object 12.

The front surface 13A of the tape is free from adhesive and has a release characteristic relative to the adhesive film so that the adhesive 10A on the film 10 can be contacted onto the front surface 13A of the tape and pulled away without dislodging the tape 13 from the object 12. The tape has a first filament 14 and a second filament 15 attached to the tape at or in the adhesive layer 13F at spaced positions across the width of the tape defining a constant spacing S therebetween. There is also provided a third filament 16 located between the first and second filaments.

All three filaments are located so that the first and second filaments are spaced from both side edges and the tape has a width arranged such that each filament tears through the tape along the length of the tape, when pulled to cut the film, rather than pulling from one side edge of the tape. Thus each of the filaments 14 and 15 is spaced from the respective side edge 13C, 13D by a distance D and preferably he distance is the same so that the tape is symmetrical.

In Figure 1B the tape is firstly severed into two separate parts 13X, 13Y by pulling the third central filament 16 through the tape to tear the tape at a central tear line 17.

In Figure 1A a length of the tape 13 to surface 11 of the object so as to be attached thereto by the adhesive 13F.

In Figure 1C the film 10 is applied onto the surface 11 and over the tape 13 such that the film 10 is attached by the adhesive 10A to the surface 11 and so that the film 10 extends to define edge pieces 10X and 10Y on both side edges 13C and 13D of the tape.

In Figure 1D the first filament 14 is pulled from the tape 13 through that part of the film 10 over the tape so as to cut the film 10 and to form a first cut edge 10B of the film. As shown in Figure 1E, the portion 10X of the film beyond the cut edge 10B is removed from the surface as well as the portion 13X of the tape. This action is carried out while the side portion 10Y of the film 10 at the edge 13D of the tape remains attached to the surface thus holding the film on top of the tape so that the film remains in place and is not free to move on the surface 11.

With the portion 10X removed as shown in Figure 1E, the tape 13X is removed exposing the surface at the area 11X so that the edge portion of the film from the cut edge 10B to the cut line 17 can be attached to the surface by the adhesive 13F. With the film thus held in place along this edge portion, the second filament 15 is pulled from the tape through the film 10 over the tape so as to cut the film at a cut line 10D and to form a second cut edge of the film.

As shown in Figure 1F, the portion 10Y of the film beyond the cut edge 10D is removed following which the portion 13Y of the tape is extracted and removed. Thus the cutting of the film 10 by the first and second filaments 14 and 15 forms a strip 10Z of the film having a width between the cut line 10B and 10D which is of course equal to the spacing S between the filaments on the tape with the strip being attached to the surface 11 as a visible stripe thereon.

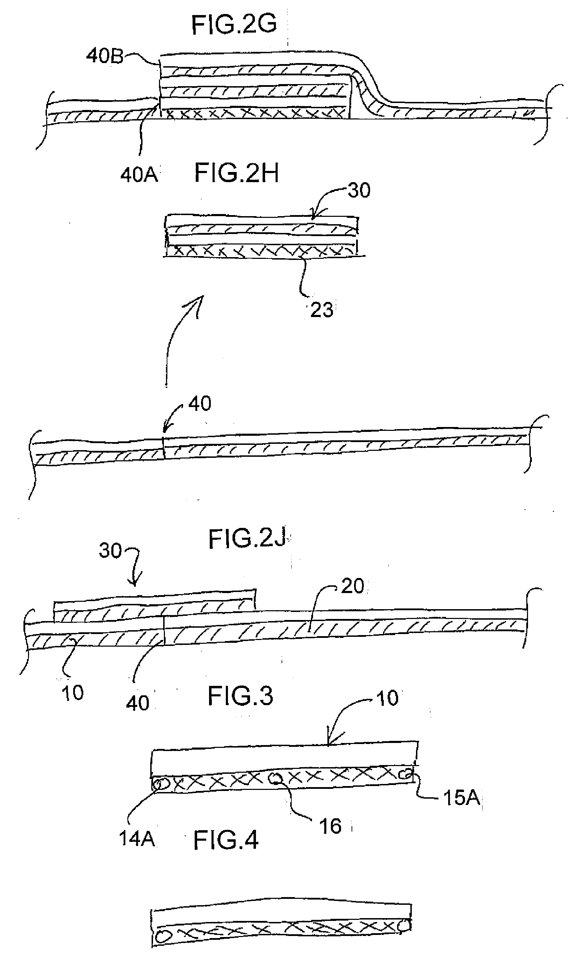

While the preferred arrangement is shown in Figures 1A, the first and second filaments 14A, 15A can arranged respectively at the first and second edges of the tape as shown in Figure 3.

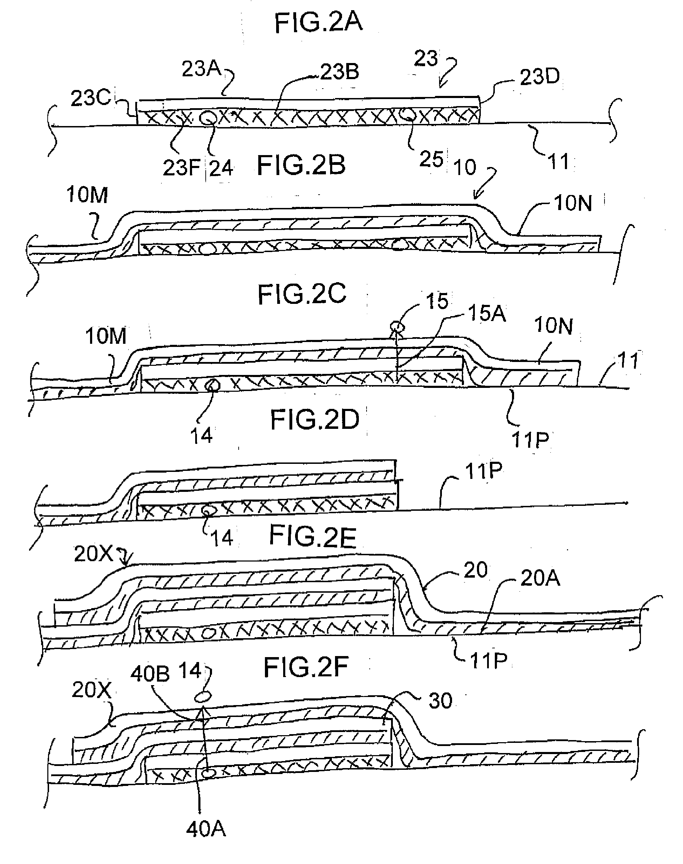

Turning now to Figures 2A to 2J, there is shown a second method for applying adhesive films 10 and 20 to the surface 11 of the object 12 where the films are arranged to provide a butting edge 40 and one of the films is cut to form a strip 30 which can be applied over the butting edge 40 as a protection therefor.

The method comprises, as shown in Figure 2A, providing a tape 23 having a front surface 23A, a rear surface 23B, a first longitudinal side edge 23C and a second longitudinal side edge 23D defining a width therebetween with an adhesive 23F on the rear surface for attachment to the surface 11. The front surface 23A of the tape is free from adhesive and has a release characteristic relative to the adhesive film 10, 20 such that the adhesive on the film can be contacted onto the front surface of the tape and pulled away without dislodging the tape. The tape has first and second filaments 24, 25 attached thereto at spaced positions across the width of the tape defining a constant spacing therebetween so that the first filament is closer to the first edge of the tape and the second filament is closer to the second edge.

In Figure 2A a length of the tape is applied to the surface 11.

In Figure 2B the first film 10 is applied onto the surface 11 and over the tape such that the film is attached by the adhesive to the surface 11 and so that the film extends to both side edges of the tape with a main body 10M of the first film on the first edge side of the tape and a removable edge portion 10N of the first film on the second edge side of the tape;

In Figure 2C the second filament 15 is pulled from the tape through that part of the first film 10 over the tape so as to cut the first film at a cut line 15A so as to separate the main body 10M of the first film from the removable edge portion 10N of the first film 10 with the removable edge portion 10N of the first film being removed as shown in Figure 2D from a portion 11 P of the surface of the object up to the first cut edge 15A.

As shown in Figure 2E, the second film 20 is applied so that the second film is located onto the surface of the object at the portion 11 P of the surface 11 and is attached by the adhesive 20A to the portion 11 P with the second film 20 extending over the first film 10 on the tape and beyond the tape so as to define a removable edge portion 20X of the second film 20 on the side of the tape defined by the first edge 23C;

As shown in Figure 2F, the first filament is pulled from the tape through those parts of the first and second films 10, 20 over the tape 23 so as to cut the first and second films film 10, 20 and to form butting cut edges 40A, 40B at the butting edges 40 of the first and second films with remaining portions 30 and 20X of the first and second films extending beyond the butting cut edges 40A and 40B respectively.

The remaining portion 20X of the second film extending beyond said butting cut edge 40B is removed. The tape 23 including all portions thereof on either side of the cut lines is removed and the portion 30 of the film 10 is removed from the surface with the center part of the tape between the filaments 24, 25 so that the butting cut edges 40A, 40B lie in butting relationship directly on the surface 11 and attached thereto by the adhesive thereon.

The strip 30 of the first film 10 is formed by the first and second filaments 24, 25 having a with equal to the constant spacing between the first and second filaments so that the strip 30 is removed with the tape 23 as shown in Figure 2H from the surface and reapplied as shown in Figure 2J to the object over the butting edges 40. This use of the strip 30 is optional but when used provides a protection for the butting edge 40. As the strip has the same color as the film 10, it is not visibly distinct at the butting edge 40.

This method as in the first method thus generates a strip of the film of constant width but in this case the strip is applied onto the film in a separate step and is not held in place n the surface as set out in the first method.

Figure 4 shows a two filament tape similar to that in Figures 2A to 2J where the filaments are at the edge of the tape.

**Claims**

1. A method for applying adhesive film to a surface of an object, the method comprising:

    providing a tape having a front surface, a rear surface, a first longitudinal side edge and a second longitudinal side edge defining a width therebetween;
    the tape having an adhesive on the rear surface for attachment to the surface of the object;
    the front surface of the tape being free from adhesive and having a release characteristic relative to the adhesive film such that the adhesive on the film can be contacted onto the front surface of the tape and pulled away without dislodging the tape from the object;
    the tape having a first and a second filament attached thereto at spaced positions across the width of the tape defining a constant spacing therebetween;
    applying a length of the tape to surface of the object so as to be attached thereto by the adhesive thereon;
    positioning the film onto the surface of the object and over the tape such that the film is attached by the adhesive to the surface of the object and so that the film extends to both side edges of the tape;
    pulling the first filament from the tape through that part of the film over the tape so as to cut the film and to form a first cut edge of the film;
    pulling the second filament from the tape through that part of the film over the tape so as to cut the film and to form a second cut edge of the film;
    the cutting of the film by the first and second filaments forming a strip of the film having a width defined by the spacing between the filaments on the tape;
    the strip being attached to the object as a visible stripe thereon;
    the tape being removed from the surface.

2. The method according to Claim 1 wherein the tape is severed along its length so as to provide a first portion of the tape along the first side edge of the tape and a second portion of the tape along the second side edge of the tape and including firstly removing the first portion of the tape while the film remains attached to the surface along the second edge of the tape and subsequently removing second portion of the tape while a part of the strip is attached to the surface.

3. The method according to Claim 2 wherein the tape is severed by a third filament carried on the tape between the first and second filaments.

4. The method according to any preceding Claim wherein the strip is removed with the tape from the surface and reapplied to the object.

5. A tape for use in applying adhesive film to a surface of an object comprising:

    a tape having a front surface, a rear surface, a first longitudinal side edge and a second longitudinal side edge defining a width therebetween;
    the tape having an adhesive on the rear surface for attachment to the surface of the object;
    the front surface of the tape being free from adhesive and having a release characteristic relative to the adhesive film such that the adhesive on the film can be contacted onto the front surface of the tape and pulled away without dislodging the tape from the object;

the tape having a first and a second filament attached thereto at spaced positions across the width of the tape defining a constant spacing therebetween;

the first filament being arranged to be pulled from the tape through that part of a film over the tape so as to cut the film and to form a first cut edge of the film;

the second filament being arranged to be pulled from the tape through that part of the film over the tape so as to cut the film and to form a second cut edge of the film;

whereby cutting of the film by the first and second filaments forming a strip of the film having a width defined by the spacing between the filaments on the tape;

wherein there is provided a third filament located between the first and second filaments.

6. The tape according to Claim 5 wherein the tape is extensible so as to allow bending to at least one side by extension along the opposite side.

7. The tape according to Claim 1 wherein the first and second filaments are spaced from both side edges and the tape has a width arranged such that each filament tears through the tape along the length of the tape, when pulled to cut the film, rather than pulling from one side edge of the tape.

8. The method according to Claim 1 wherein the first and second filaments are arranged respectively at the first and second edges of the tape.

9. A method for applying adhesive film to a surface of an object, the method comprising:

providing a tape having a front surface, a rear surface, a first longitudinal side edge and a second longitudinal side edge defining a width therebetween;

the tape having an adhesive on the rear surface for attachment to the surface of the object;

the front surface of the tape being free from adhesive and having a release characteristic relative to the adhesive film such that the adhesive on the film can be contacted onto the front surface of the tape and pulled away without dislodging the tape from the object;

the tape having a first and a second filament attached thereto at spaced positions across the width of the tape defining a constant spacing therebetween so that the first filament is closer to the first edge of the tape and the second filament is closer to the second edge;

applying a length of the tape to surface of the object so as to be attached thereto by the adhesive thereon;

positioning a first film onto the surface of the object and over the tape such that the film is attached by the adhesive to the surface of the object and so that the film extends to both side edges of the tape with a main body of the first film on the first edge side of the tape and a removable edge portion of the first film on the second edge side of the tape;

pulling the second filament from the tape through that part of the first film over the tape so as to cut the first film and to form a first cut edge of the first film so as to separate the main body of the first film from the removable edge portion of the first film;

removing the removable edge portion of the first film from a portion of the surface of the object up to the first cut edge;

positioning a second film so that the second film is located onto the surface of the object at said portion of the surface of the object and is attached by the adhesive to said portion;

the second film extending over the first film on the tape so as to define a removable edge portion of the second film on the first edge side of the tape;

pulling the first filament from the tape through those parts of the first and second films over the tape so as to cut the first and second films film and to form butting cut edges of the first and second films with remaining portions of the first and second films extending beyond said butting cut edges;

removing said remaining portions of the first and second films extending beyond said butting cut edges;

the tape being removed from the surface so that the butting cut edges lie in butting relationship on said surface.

10. The method according to Claim 9 wherein a strip of the first film is formed by the first and second filaments having a width equal to the constant spacing between the first and second filaments and wherein the strip is removed with the tape from the surface and reapplied to the object over the butting edges.

11. A tape for use in applying adhesive film to a surface of an object comprising:

a tape having a front surface, a rear surface, a first longitudinal side edge and a second longitudinal side edge defining a width therebetween;

the tape having an adhesive on the rear surface for attachment to the surface of the object;

the front surface of the tape being free from adhesive and having a release characteristic relative to the adhesive film such that the adhesive on the film can be contacted onto the front surface of the tape and pulled away without dislodging the tape from the object;

the tape having a first and a second filament attached thereto at spaced positions across the width of the tape defining a constant spacing therebetween;

the first filament being arranged to be pulled from the tape through that part of a film or films over the tape so as to cut the film and to form a first cut edge of the film;

the second filament being arranged to be pulled from the tape through that part of a film or films over the tape so as to cut the film and to form a second cut edge of the film;

wherein the first and second filaments are arranged respectively at the first and second edges of the tape.

12. The tape according to Claim 11 wherein the tape is extensible so as to allow bending to at least one side by extension along the opposite side.

FIG.1A

FIG.1B

FIG.1C

FIG.1D

FIG.1E

FIG.1F

# FIG.2A

# FIG.2B

# FIG.2C

# FIG.2D

# FIG.2E

# FIG.2F

## FIG.2G

40B

40A

## FIG.2H

30

23

40

## FIG.2J

30

20

10     40

## FIG.3

10

14A

16

15A

## FIG.4

Europäisches
Patentamt

European
Patent Office

Office européen
des brevets

# EUROPEAN SEARCH REPORT

Application Number

EP 14 18 9579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/011527 A1 (VAN DEN BERGHE GARRY CYRILLE ALFRED [CA] ET AL) 20 January 2011 (2011-01-20) | 1,4,11,12 | INV. B44C1/10 C09J7/00 B60R13/00 |
| Y | * paragraph [0001] - paragraph [0128]; figure 8C * ----- | 6 | |
| X | WO 2008/151634 A1 (HONORE HANS [DK]) 18 December 2008 (2008-12-18) | 5,7,8,11 | |
| Y | * page 5, line 13 - page 7, line 24; figures 2,4,5A * ----- | 6 | |
| A | US 2005/008808 A1 (LANGEMAN GARY D [CA]) 13 January 2005 (2005-01-13) * the whole document * ----- | 1-12 | |
| A | US 5 466 500 A (PLUIM ARTHUR W [US]) 14 November 1995 (1995-11-14) * column 2, line 28 - column 5, line 40 * ----- | 1-12 | |

TECHNICAL FIELDS
SEARCHED (IPC)

B44C
C09J
B60R

The present search report has been drawn up for all claims

| Place of search | Date of completion of the search | Examiner |
|---|---|---|
| Munich | 8 April 2015 | Björklund, Sofie |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 14 18 9579

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2015

| Patent document cited in search report | | Publication date | Patent family member(s) | | Publication date |
|---|---|---|---|---|---|
| US 2011011527 | A1 | 20-01-2011 | NONE | | |
| WO 2008151634 | A1 | 18-12-2008 | NONE | | |
| US 2005008808 | A1 | 13-01-2005 | AU | 712983 B2 | 18-11-1999 |
| | | | AU | 1864097 A | 16-09-1997 |
| | | | CA | 2170573 A1 | 29-08-1997 |
| | | | DE | 69709543 D1 | 14-02-2002 |
| | | | DE | 69709543 T2 | 08-08-2002 |
| | | | EP | 0883445 A1 | 16-12-1998 |
| | | | JP | 3818670 B2 | 06-09-2006 |
| | | | JP | 2001502593 A | 27-02-2001 |
| | | | US | 6025045 A | 15-02-2000 |
| | | | US | 6284319 B1 | 04-09-2001 |
| | | | US | 2001023003 A1 | 20-09-2001 |
| | | | US | 2002192417 A1 | 19-12-2002 |
| | | | US | 2005008808 A1 | 13-01-2005 |
| | | | WO | 9731720 A1 | 04-09-1997 |
| US 5466500 | A | 14-11-1995 | CA | 2181894 A1 | 24-08-1995 |
| | | | DE | 69508619 D1 | 29-04-1999 |
| | | | EP | 0797646 A1 | 01-10-1997 |
| | | | JP | H09509208 A | 16-09-1997 |
| | | | US | 5466500 A | 14-11-1995 |
| | | | WO | 9522584 A1 | 24-08-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8187407 B
- US 8361615 B

- CN 2700471